# EUROPÄISCHE PATENTANMELDUNG

(11) **EP 0 992 226 A2**
(43) Veröffentlichungstag der Anmeldung: **12.04.2000**
(21) Anmeldenummer: 99118421.9
(22) Anmeldetag: 17.09.1999
(51) Int. Cl.: A61G 5/10

(54) **Rollstuhl**

(30) Priorität: 05.10.1998 DE 29817702 U
(71) Anmelder: Sopur Medizintechnik GmbH, 69254 Malsch (DE)
(72) Erfinder: Schnitzler, Bernhard, 68753 Waghäusel 1 (DE); Seidel, Heido, 68723 Offersheim (DE); Steinmetz, Andreas, 67112 Mutterstadt (DE)
(74) Vertreter: Geitz, Heinrich, Dr.-Ing.

(57) **Zusammenfassung**

Der Rollstuhl besitzt einen Fahrwerksrahmen mit zwei seitlichen Rahmenteilen, an denen in Fahrtrichtung beabstandet voneinander je ein hinteres Antriebsrad und ein mittels eines Lenkradadapters um eine Hochachse verschwenkbares vorderes Lenkrad gelagert sind.

Die Lenkradadapter (16), die an ihrerseits fest an den seitlichen Rahmenteilen (24) angebrachten Lagerkonsolen (20) befestigt sind, nehmen jeweils einen von einer Lenkradführung, etwa einer Lenkradgabel (12), als Lenkrad-Hochachse vorstehenden Lagerzapfen drehbar auf und sind jeweils um quer zu ihren Hochachsen verlaufende Lagerachsen (41) gegenüber den Lagerkonsolen (20) verdrehbar gelagert sowie in jeder Einstellage durch Verspannen mit der jeweiligen Lagerkonsole (20) feststellbar.

## Beschreibung

Die Erfindung betrifft einen Rollstuhl mit einem Fahrwerksrahmen, der zwei seitliche Rahmenteile aufweist, an denen in Fahrtrichtung beabstandet voneinander je ein hinteres Antriebsrad und mittels eines Lenkradadapters ein um eine Hochachse verschwenkbares vorderes Lenkrad gelagert sind.

In der DE 296 D7 440 U ist bereits ein Rollstuhl vorbeschrieben, bei dem die vorderen Lenkräder mittels spezieller Lenkradadpter um Hochachsen verschwenkbar an den seitlichen Rahmenteilen des Fahrwerkrahmens so gelagert sind, daß im Interesse guter Geradeauslaufeigenschaften des Rollstuhls eine Sturzeinstellung der Lenkräder innerhalb vorgegebener Grenzen gelingt.

Eine derartige Lenkradlagerung im Bereich der Lenkradochachsen hat sich bewährt, erscheint aber noch verbesserungsbedürftig, weil ein Rollstuhl nur dann den Erfordernissen genügende Fahreigenschaften besitzt, wenn die Hochachsen der Lenkräder weitgehend senkrecht verlaufen. Dies ist bei der vorbekannten Lenkradlagerung jedenfalls dann nicht gewährleistet, wenn im Interesse einer Sitzneigungseinstellung die Neigung des Rollstuhls im Gesamten verändert wird.

Aus therapeutischen Gründen ist es häufig notwendig, die Sitzneigung entsprechend den individuellen Bedürfnissen des jeweiligen Benutzers einzustellen. In der Regel erfolgt die Sitzneigungseinstellung dadurch, daß die Neigung des gesamten Rollstuhls verändert, also der Rollstuhl mehr oder weniger um die von den Achsen der Antriebsräder gebildete Querachse verschwenkt und die Höhenposition der Lenkräder gegenüber dem Fahrwerksrahmen entsprechend angepaßt wird. Eine derartige Neigungsveränderung des gesamten Rollstuhls führt zu einer unerwünschten Winkelveränderung der Lenkrad-Hochachsen derart, daß diese nicht mehr senkrecht verlaufen, was wiederum die Fahreigenschaften beeinträchtigt.

Demgemäß soll durch die Erfindung ein Rollstuhl geschaffen werden, bei dem innerhalb vorgegebener Grenzen die Hochachsen der Lenkräder so einstellbar sind, daß sie im wesentlichen senkrecht verlaufen und etwaige Winkelfehler ausgleichbar sind, die auf Fertigungstoleranzen, Montageungenauigkeiten oder auch Neigungsveränderungen des gesamten Rollstuhls beruhen können.

Gelöst ist diese Aufgabe dadurch, daß bei dem Rollstuhl nach dem Oberbegriff des Schutzanspruchs 1 die an ihrerseits fest mit den seitlichen Rahmenteilen angebrachten Lagerkonsolen befestigten Lenkradadapter, die jeweils einen von einer Lenkradführung, etwa einer Lenkradgabel, als Lenkrad-Hochachse vorstehenden Lagerzapfen drehbar aufnehmen, jeweils um quer zu ihren Hochachsen verlaufende Lagerachsen gegenüber den Lagerkonsolen verdrehbar gelagert und in jeder Einstellage durch Verspannen mit der jeweiligen Lagerkonsole feststellbar sind.

Durch die Erfindung ist somit ein an Rollstühlen in einfacher Weise anbringbarer Lagerbock geschaffen worden, der innerhalb in Betracht kommender Grenzen Lageeinstellungen der Lenkrad-Hochachsen derart ermöglicht, daß diese weitestgehend senkrecht verlaufen. Dadurch sind auf Fertigungstoleranzen und/oder Montageungenauigkeiten zurückgehende Schrägstände der Lenkrad-Hochachsen ebenso ausgleichbar, wie auf Neigungsveränderungen des gesamten Rollstuhls beruhende Schrägstände.

Zweckmäßigerweise sind die an den seitlichen Rahmenteilen angebrachten Lagerkonsolen und die an diesen befestigten Lenkradadapter mit aneinander anliegenden und gegeneinander verspannten Kontaktflächen ausgerüstet.

Um eine über reinen Kraftschluß hinausgehende Sicherung der Lenkradadapter an den diese aufnehmenden Lagerkonsolen in der jeweiligen Einstellage zu gewährleisten, sinc gemäß einer Weiterbildung der Erfindung die Kontaktflächen mit im verspannten Zustand eines Lenkadapters mit einer Lagerkonsole formschlüssig ineinandergreifenden und dadurch den Lenkradadapter in der jeweils gewählten Winkeleinstellung sichernden Verrastungsmitteln versehen.

Bei diesen Verrastungsmitteln kann es sich zweckmäßigerweise um Stirnverzahnungen handeln, die in den Kontaktflächen konzentrisch zu den die Winkelverstellbarkeit der Lenkradadapter gegenüber den diese aufnehmenden Lagerkonsolen ermöglichenden Achsen angeordnet sind. Logischerweise sollten diese Stirnverzahnungen kleine Teilungen aufweisen, so daß eine Winkeleinstellung der Lenkradadapter gegenüber den zugeordneten Lagerkonsolen in kleinen Schritten möglich ist.

Eine andere wichtige Weiterbildung der Erfindung sieht vor, daß die quer zu den Lenkrad-Hochachsen verlaufenden Achsen, die ein Verschwenken der Lenkradadapter gegenüber den diese aufnehmenden Lagerkonsolen ermöglichen, jeweils von einer einen Lenkradadapter mit der diesen aufnehmenden Lagerkonsole verspannenden Spannschraube gebildet sind. Angesichts dieser Doppelfunktion der Spannschraube als Spannmittel einerseits und Lagermittel andererseits ergibt sich ein kostengünstiger Aufbau der Hochachsen-Lenkradlagerung.

Ebenfalls eine Weiterbildung sieht vor, daß die Lenkradadapter und Lagerkonsolen jeweils mittels einer zweiten Spannschraube gegeneinander verspannt sind, die beabstandet von der die Lagerachse zum Verschwenken eines Lenkradadapters gegenüber der diesen aufnehmenden Lagerkonsole bildenden ersten Spannschraube angreift.

Zweckmäßigerweise erstreckt sich die zweite Spannschraube durch eine Führungsausnehmung hindurch, die langlochartig ausgebildet und konzentrisch zu der ersten Spannschraube in einem der beiden gegeneinander verspannbaren Teile angeordnet ist.

Um im Falle der Verspannung eines Lenkradadapters mit der diesen aufnehmenden Lagerkonsole sicherzustellen, daß die formschlüssig zusammenwirkende Verrastungsmittel wirksam ineinandergreifen, sind die Verrastungsmittel zweckmäßigerweise im Bereich der zweiten Spannschraube angeordnet.

Eine konstruktiv einfache Ausbildung der Lagerböcke zum Lagern der Lenkräder um ihre Hochachsen ergibt sich, wenn es sich bei den Lagerkonsolen zum Aufnehmen jeweils eines Lenkradadapters um an einem Rahmenrohr eines seitlichen Rahmenteils lösbar befestigte Klemmschellen handelt.

Zweckmäßigerweise umfassen die Klemmschellen und jeweils ein Klemmschellen-Gegenstück das Rahmenrohr auf einander gegenüberliegenden Seiten, und sind mittels Spannschrauben unter Einklemmung des Rahmenrohrs lösbar auf diesem festgelegt.

Ebenfalls im Interesse einer einfachen Lagerbockausbildung sieht eine abermalige Weiterbildung vor, daß die Lenkradadapter jeweils mit einer diesen aufnehmenden Klemmschelle und letztere sowie das zugeordnete Klemmschellen-Gegenstück mit dem Rahmenrohr mittels ein und derselben Spannschrauben verspannt sind.

Eine abermalige Weiterbildung sieht vor, daß die Lagerkonsolen jeweils an einem horizontal, vertikal oder geneigt verlaufenden Rahmenrohr eines seitlichen Rahmenteils angebracht sind. Im Rahmen der Erfindung ist somit die gesamte Baugruppe "Lenkrad" an beliebig verlaufenden Rahmenrohren anbringbar, wofür es lediglich dem Rahmenverlauf angepaßter Klemmschellen und Klemmschellengegenstücke bedarf.

Als besonders kostengünstig hat sich erwiesen, wenn die Lenkradadapter, die Klemmschellen und die Klemmschellengegenstücke als Formteile aus Aluminium ausgebildet sind.

Eine Ausführungsform der Erfindung soll nachstehend anhand der beigefügten Zeichnung erläutert werden. In schematischen Ansichten zeigen:

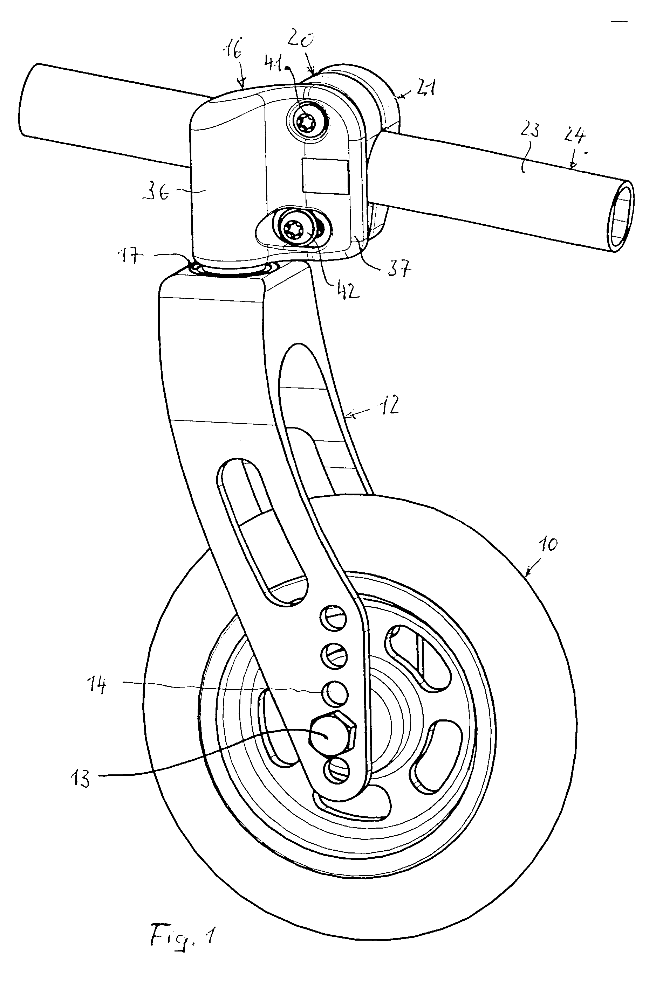

- Fig. 1: die um eine Hochachse verschwenkbare Lagerung eines Lenkrades an einem Rahmenrohr eines seitlichen Rahmenteils eines Rollstuhl-Fahrwerkrahmens in einer perspektivischen Darstellung und

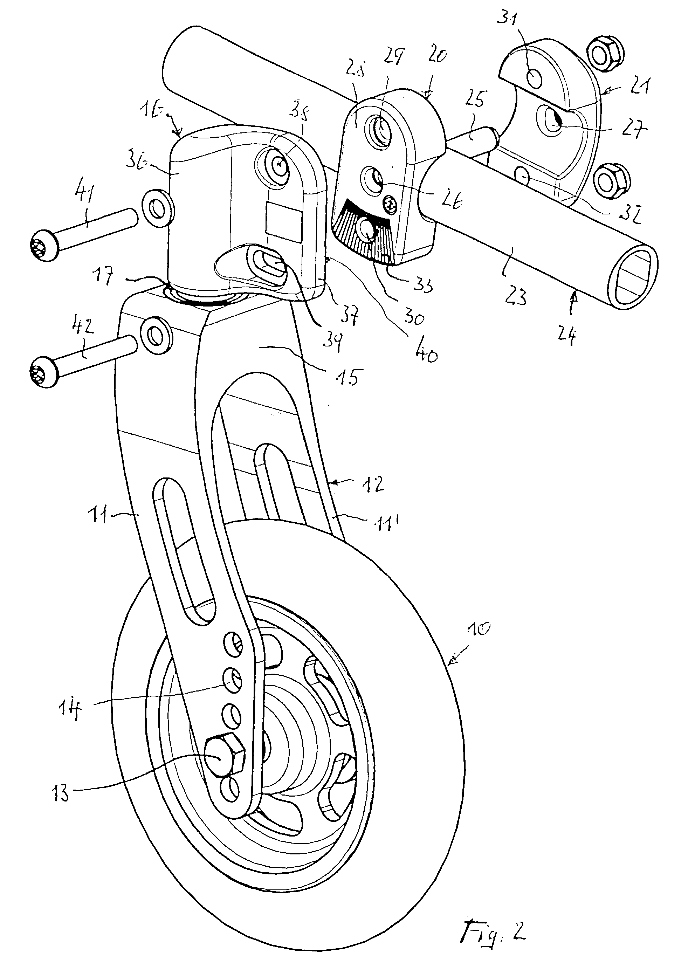

- Fig. 2: in einer Ansicht wie in Fig. 1 die Lenkradlagerung in einer Explosionsdarstellung.

Das in der Zeichnung veranschaulichte Lenkrad 10 ist zwischen den beiden Schenkeln 11, 11' einer Lenkradgabel 12 mittels einer horizontal verlaufenden Lagerachse 13 drehbar aufgenommen. Die Schenkel 11, 11' der Lenkradgabel sind mit mehreren jeweils voneinander beabstandeten Lochungen 14 versehen, die im Interesse einer Neigungsveränderung eines nicht dargestellten Rollstuhls unterschiedliche Einbauten des Lenkrades 10 ermöglichen.

Ein sich von einem Gabelsteg 15, der die Schenkel 11, 11' der Lenkradgabel 12 miteinander verbindet, nach der von den Schenkeln 11, 11' wegweisenden Seite vorstehender Lagerzapfen ist in einem Lenkradadapter 16 mittels eines Wälzlagers 17 drehbar gelagert und bildet eine sich rechtwinklig zu der Lagerachse 13 erstreckende Hochachse, um welche die Lenkradgabel 12 mit dem Lenkrad 10 verschwenkbar ist.

Der Lenkradadapter 16 ist an einer als Klemmschelle 20 ausgebildeten Lagerkonsole in nachstehend noch zu erläuternder Weise befestigt. Die Klemmschelle 16 umgreift zusammen mit einem Klemmschellen-Gegenstück 21 ein Rahmenrohr 23 eines seitlichen Rahmenteils 24 des nicht gezeigten Rollstuhl-Fahrwerksrahmens und ist auf dem Rahmenrohr 23 lösbar festgelegt. Durch das Rahmenrohr 23 erstreckt sich ein Zapfen 25 hindurch, der in Ausnehmungen 26, 27 der Klemmschelle 20 und des Klemmschellen-Gegenstücks 21 aufgenommen ist.

Die als Klemmschelle 20 ausgebildete Lagerkonsole besitzt auf der vom Klemmschellen-Gegenstück 21 wegweisenden Seite eine Kontaktfläche 28 und durch über und unter das Rahmenrohr 23 hinausragende Abschnitte erstrecken sich Durchgangsbohrungen 29, 30 hindurch, die mit entsprechenden Durchgangsbohrungen 31, 32 im Klemmschellen-Gegenstück 21 fluchten. Ferner ist die Kontaktfläche 28 der Klemmschelle 20 im Bereich der unteren Durchgangsbohrung 30 mit einer Stirnverzahnung 33 versehen, die konzentrisch zu der oberen Durchgangsbohrung 29 angeordnet und mit auf diese ausgerichteten Zähnen versehen ist.

Der Lenkradadapter 16 besitzt ein Lagerteil 36, das den von der Lenkradgabel 12 als Hochachse vorstehenden Lagerzapfen drehbar aufnimmt, und einen vom Lagerteil 36 seitlich vorstehenden Flansch 37. Der Flansch 37 ist von einer oberen Durchgangsbohrung 38 und einem unteren Langloch 39 durchbrochen. Das Langloch 39 ist konzentrisch zu der oberen Durchgangsbohrung 38 angeordnet und der Abstand zwischen der Durchgangsbohrung 38 und dem Langloch 39 ist gleich dem Abstand zwischen den Durchgangsbohrungen 29, 30 der Klemmschelle 20. Ferner weist der Lenkradadapter 16 auf der vom Lagerteil 36 abgewandten Seite des Flanschs 37 eine der Kontaktfläche 28 der Klemmschelle 20 angepaßte Kontaktfläche 40 auf, die im Bereich des Langlochs 39 mit einer in der Zeichnung nicht dargestellten Gegenverzahnung zu der Stirnverzahnung 33 der Klemmschelle 20 ausgerüstet ist.

Der Lenkradadapter 16 ist mit seiner Kontaktfläche 40 an der Kontaktfläche 28 der Klemmschelle 20 anliegend mit letzterer mittels zweier Spannschrauben 41, 42 verspannt, die sich durch den Flansch 37 des Lenkradadapters 16 sowie die Klemmschelle 20 und das Klemmschellen-Gegenstück 21 hindurcherstrecken. Die Spannschrauben 41, 42 haben radial über die Schraubenschäfte vorstehende Köpfe, die unter Zwischenlage von Unterlegscheiben die Ränder des Durchgangsloches 38 und des Langloches 39 im Flansch 37 des Lenkradadapters hintergreifen. Die von den Schraubenköpfen entfernten Enden der Spannschrauben 41, 42 sind als Gewindeabschnitte ausgebildet, die über das Klemmschellen-Gegenstück 21 vorstehen und auf die Muttern aufgeschraubt sind. Dadurch sind einerseits die Klemmschelle 20 und das Klemmschellen-Gegenstück 21 unter Einspannung des Rahmenrohrs 23 fest auf diesem gehalten und der Lenkradadapter 16 ist mit seiner Kontaktfläche 40 mit der Kontaktfläche 28 der Klemmschelle 20 verspannt, wobei die Gegenverzahnung des Lenkradadapters 16 formschlüssig in die Stirnverzahnung 33 der Klemmschelle 20 eingreift. Dadurch ist der Lenkradadapter 16 in der gewählten Montageposition sicher gehalten.

Wenn der Lenkradadapter 16, und damit die Lenkradgabel 12 mit dem Lenkrad 10, gegenüber dem Klemmstück 20 verschwenkt werden soll, müssen zunächst die Spannschrauben 41, 42 soweit gelöst werden, daß die Gegenverzahnung des Lenkradadapters 16 und die Stirnverzahnung 33 der Klemmschelle 20 außer Eingriff gelangen. Danach ist der Lenkradadapter 16 innerhalb der durch das Langloch 39 gegebenen Grenzen um die Spannschraube 41 als Lagerachse verschwenkbar und durch erneutes Anziehen der Spannschrauben 41, 42 in der neuen Einstellage festlegbar, in der wiederum die Gegenverzahnung des Lenkradadapters 16 in die Stirnverzahnung 33 des Klemmstücks 20 formschlüssig eingreift.

Ein derartiges Verschwenken des Lenkradadapters 16 gegenüber der Klemmschelle 20 ist beispielsweise notwendig, wenn durch Versetzen des Lenkrades 10 innerhalb der Lenkradgabel 12 die Neigung des Rollstuhls in seiner Gesamtheit verändert wird, etwa im Interesse einer an die individuellen Bedürfnisse eines Benutzers notwendigen Sitzneigungsveränderung. Durch das Verschwenken des Lenkradadapters 16 gegenüber der Klemmschelle 20 wird erreicht, daß auch nach einer Neigungsveränderung des Rollstuhls in seiner Gesamtheit die Hochachsen der Lenkräder sich weitgehend vertikal erstrecken, was im Interesse guter Fahreigenschaften eines Rollstuhls erwünscht ist.

## Patentansprüche

1. Rollstuhl mit einem Fahrwerksrahmen, der zwei seitliche Rahmenteile aufweist, an denen in Fahrtrichtung beabstandet voneinander je ein hinteres Antriebsrad und mittels eines Lenkradadapters ein um eine Hochachse verschwenkbares vorderes Lenkrad gelagert sind,
dadurch gekennzeichnet,
daß die an ihrerseits fest an den seitlichen Rahmenteilen (24) angebrachten Lagerkonsolen (20) befestigten Lenkradadapter (16), die jeweils einen von einer Lenkradführung, etwa einer Lenkradgabel (12), als Lenkrad-Hochachse vorstehenden Lagerzapfen drehbar aufnehmen, jeweils um quer zu ihren Hochachsen verlaufende Lagerachsen (41) gegenüber den Lagerkonsolen (20) verdrehbar gelagert und in jeder Einstellage durch Verspannen mit der jeweiligen Lagerkonsole (20) feststellbar sind.

2. Rollstuhl nach Anspruch 1, dadurch gekennzeichnet, daß die an den seitlichen Rahmenteilen (24) fest angebrachten Lagerkonsolen (20) und die an diesen befestigten Lenkradadapter (16) aneinander anliegende und gegeneinander verspannbare Kontaktflächen (40, 28) haben.

3. Rollstuhl nach Anspruch 2, dadurch gekennzeichnet, daß die Kontaktflächen mit im verspannten Zustand eines Lenkradadapters (16) mit einer diesen aufnehmenden Lagerkonsole (20) formschlüssig ineinandergreifende und dadurch den Lenkradadapter (16) in der jeweils gewählten Winkelstellung gegenüber der Lagerkonsole (20) sichernden Verrastungsmitteln (33) versehen sind.

4. Rollstuhl nach Anspruch 3, dadurch gekennzeichnet, daß es sich bei den Verrastungsmitteln um Stirnverzahnungen (33) handelt, die in den Kontaktflächen (28, 40) konzentrisch zu den die Winkelverstellbarkeit der Lenkradadapter (16) gegenüber den diese aufnehmenden Lagerkonsolen (20) ermöglichenden Achsen angeordnet sind.

5. Rollstuhl nach einem der Ansprüche 1 bis 4, dadurch gekennzeichnet, daß die quer zu den Lenkrad-Hochachsen verlaufenden Achsen jeweils von einer Spannschraube (41) zum Verspannen des Lenkradadapters (16) mit der diesen aufnehmenden Lagerkonsole (20) gebildet sind.

6. Rollstuhl nach Anspruch 5, dadurch gekennzeichnet, daß die Lenkradadapter (16) und Lagerkonsolen (20) jeweils mittels einer zweiten Spannschraube (42) gegeneinander verspannt sind, die beabstandet von der die Lagerachse zum Verschwenken eines Lenkradadapters (16) gegenüber der diesen aufnehmenden Lagerkonsole (20) bildenden ersten Spannschraube (41) angreift.

7. Rollstuhl nach Anspruch 6, dadurch gekennzeichnet, daß die im Falle der Verspannung eines Lenkradadapters (16) mit der diesen aufnehmenden Lagerkonsole (20) formschlüssig ineinandergreifenden Verrastungsmittel (33) im Bereich der zweiten Spannschraube (42) angeordnet sind.

8. Rollstuhl nach Anspruch 6 oder 7, dadurch gekennzeichnet, daß die zweite Spannschraube (42) sich durch eine Führungsausnehmung (39) hindurcherstreckt, die langlochartig ausgebildet und konzentrisch zu der ersten Spannschraube (41) in einem der beiden gegeneinander verspannbaren Teile angeordnet ist.

9. Rollstuhl nach einem der Ansprüche 1 bis 8, dadurch gekennzeichnet, daß die Lagerkonsolen zum Aufnehmen jeweils eines Lenkradadapters (16) als an einem Rahmenrohr (23) eines seitlichen Rahmenteils (24) lösbar befestigte Klemmschellen (20) ausgebildet sind.

10. Rollstuhl nach Anspruch 9, dadurch gekennzeichnet, daß die Klemmschellen (20) und jeweils ein Klemmschellen-Gegenstück (21) das Rahmenrohr (23) auf einander gegenüberliegenden Seiten umfassen und mittels Spannschrauben (41, 42) lösbar auf dem Rahmenrohr (23) festgelegt sind.

11. Rollstuhl nach Anspruch 10, dadurch gekennzeichnet, daß die Lenkradadapter (16) jeweils mit einer diesen aufnehmenden Klemmschelle (20) und letztere sowie das zugeordnete Klemmschellen-Gegenstück (21) mit dem Rahmenrohr (23) mittels ein und derselben Spannschraube (41, 42) verspannt sind.

12. Rollstuhl nach einem der Ansprüche 1 bis 11, dadurch gekennzeichnet, daß die Lagerkonsolen (20) jeweils an einem horizontal, vertikal oder geneigt verlaufenden Rahmenrohr eines seitlichen Rahmenteils (24) angebracht sind.

13. Rollstuhl nach einem der Ansprüche 9 bis 12, dadurch gekennzeichnet, daß die Lenkradadapter (16), die Klemmschellen (20) und die Klemmschellen-Gegenstücke (21) als Aluminium-Formteile ausgebildet sind.
